Europäisches Patentamt

European Patent Office

Office européen des brevets

(19)

(11) Publication number: **0 115 956**
A1

# (12) EUROPEAN PATENT APPLICATION

(21) Application number: **84300605.7**

(22) Date of filing: **31.01.84**

(51) Int. Cl.³: **A 01 C 1/04**, B 65 D 85/52

(30) Priority: **01.02.83 GB 8302676**

(43) Date of publication of application: **15.08.84**
**Bulletin 84/33**

(84) Designated Contracting States: **DE FR GB IT NL**

(71) Applicant: **Spontex Ltd., St. Nicholas Quay Maritime Quarter, Swansea SA1 1UT Wales (GB)**

(72) Inventor: **Henderson, Ian, Owls Lodge Owls Lodge Lane, Mayals Swansea, Wales (GB)**
Inventor: **Jones, David Thomas, Gorse Villa 13 Tan-y-wern Lane, Ystalyfera Swansea, Wales (GB)**

(74) Representative: **Coulson, Antony John et al, ABEL & IMRAY, Northumberland House 303-306 High Holborn, London, WC1V 7LH (GB)**

(54) **Protection and identification of bulbs, fruit, vegetables and seeds.**

(57) Bio-degradable film material, preferably regenerated cellulose, is used to encase bulbs, corms, fruit, vegetable, seeds and the like. The film can be coloured or printed for identification purposes, and, in addition to giving some protection against physical damage, may incorporate fungicides, bactericides, insecticides and/or nutrients. To facilitate setting as well as protection of seeds, they may be encased at appropriate distances apart along a tape of bio-degradable film material.

EP 0 115 956 A1

## Protection and identification of bulbs etc.

This invention relates to a method of effecting one or more protection and/or identification functions in relation to bulbs, corms, fruit, vegetables and the like.

The invention also relates to a method of carrying out one or more such functions in relation to seeds and generally to a method for the facilitation and improvement of handling, sowing and germination of seeds.

More specifically, the invention is concerned with problems of identification and of protection against physical damage and against attack by diseases and/or pests.

Thus, for example, as regards problems of identification, it is known that flower bulbs, especially those sold loose in shops, markets and garden centres, are likely to get mixed with other varieties of the same type so that the purchaser may not obtain the flower he desires.

Flower bulbs also require careful handling to prevent physical damage and also attack by micro-organisms and pests. This is well understood in the trade and great care is taken during handling and packaging.

In spite of this, however, recent studies have indicated that a significant proportion of bulbs are found to be damaged or diseased in some way when purchased. Thus, for example, the bulb tunic may be in poor condition and there may be evidence of bruising or other physical damage. Further problems which may be encountered include fungus diseases such as <u>Penicillium</u> mould, <u>Fusarium</u> bulb rot and attack by bulb mites or tulip bulb aphids.

Accordingly, in spite of the care taken by the growers and the fact that it is common practice for the grower to treat the bulb with fungicide solution, the existing arrangements are not fully effective.

It is also known that certain fruit and vegetables are prone to disease after harvesting. It is a further object of this invention to provide a method of preventing or reducing such disease as well as to facilitate the in-line packaging of such items.

A variety of pre-packaging methods have already been proposed or are in use (for example, nets, perforated bags, blister packs, divided boxes) but each such method is subject to certain limitations and disadvantages.

According to the present invention, it is proposed that each individual bulb or other item should be at least partly encased by a bio-degradable film.

The use of such films offers a variety of advnatages. Thus, for example, as well as providing for identification and some protection against physical damage, such films can be made capable of holding effective quantities of fungicide to protect the bulbs, fruit or vegetables or the like against attack by micro-organisms.

Insecticides, nutrients and other active ingredients (more especially materials which are miscible with or soluble in water) may also be incorporated for specific purposes.

In the case of bulbs, corms, seeds and the like, the film will generally surround the item in such a way that it remains securely attached during transport and display and the item can be planted with the film still intact. The individual item can therefore be clearly identified and protected from point of sale to planting.

Especially in the case of bulbs and the like, the film should be such as to allow the item to "breathe" whilst at the same time desirably providing an effective barrier against the attack of insects and/or micro-organisms.

A further advantage of the method of the invention lies in the possibility of controlling moisture loss during storage of, for example, bulbs, by selecting a film material of suitable moisture permeability. At least in some cases, this may avoid the need for storing the bulbs under refrigeration.

Methods of producing film materials with differing moisture permeability will be known to those skilled in the art. Thus, for example, in the case of a cellophane or regenerated cellulose film, the moisture permeability can be varied, for example, by coating with nitrocellulose. In general, according to published literature, the moisture vapour transmission (MVT) rates of regenerated cellulose films may lie in the range of from about 0.4 to about 134 $gm/100\ ins^2/$ 24 hr/ml.

According to the present invention, it is also proposed to use a bio-degradable film to encase seeds at appropriate distances apart in the form of a tape which may subsequently be set in the ground. This is a much more convenient procedure than sowing loose seeds.

In addition to facilitating generally the setting of seeds (and providing a measure of physical protection) such a tape can offer a number of other advantages, for example, added precision in spacing the setting of seeds; improved germination rates; prevention or reduction of "pricking out"; reduced wastage; and positive seed identification.

Bio-degradability is of particular importance in relation to bulbs and seeds which are to be subsequently planted or sown.

In the case of fruit and vegetables, the film can be arranged to give protection, identification and classification of quality. It may remain in position until the fruit or vegetable is required for use.

Advantageously, the film used according to the present invention is made from regenerated cellulose, for example, that manufactured by Spontex Limited and sold under the trade name of "Viskrings".

Regenerated cellulose rings have previously been used in the bottling trade as secondary, decorative, security seals and in the pharmaceutical industry where they can form a good microbial barrier. The material is normally supplied wet in a solution which contains fungicide and bactericide to protect the ring. Examples of such materials which may be used include chlorinated phenols and cresols; quaternary ammonium compounds; chlorhexidine; chloramine-T and formaldehyde. The rings are applied to the object to be sealed in a wet state and allowed to dry naturally or by forced drying. During drying the rings can shrink up to 30 % in a transverse direction to produce a tight seal following the contours of the bottle or container.

Naturally, the initial size of the rings or tubing is matched approximately to the size of the substrate item, so that, on shrinkage, the item is properly encased. In the practice of the present invention, this may in turn entail some preliminary grading of, for example, bulbs of different sizes.

Regenerated cellulose rings can be applied by hand or by automatic machinery which is loaded with reels of tubing from which rings are cut and applied automatically.

In the practice of the present invention, these methods of applying a wet, tubular regenerated cellulose material can be employed in the packaging of bulbs, corms, fruit, vegetables, seeds and the like. The material, conveniently in the form of rings, can be applied to individual items or a number of items can be loaded into a length of suitably coloured/printed tubing which is then dried down to give a string of identified and protected items.

The dried material will then provide a permanent identification and protective label and, since regenerated cellulose is bio-degradable, the label need not be removed before planting of, for example, a bulb and will be completely degraded by the time the bulb flowers, incidentally providing additional humus to the soil. As regenerated cellulose in the wet state contains approximately four times its dry weight of water, then by the use of a suitable solution, considerable quantities of fungicide can be loaded into the cellulose, thereby preventing or inhibiting attack by micro-organisms on the bulb.

Film material suitable for use in accordance with the present invention can be produced in clear or opaque form in virtually any colour and may be printed, optionally in colour, with details of contents, instructions or illustrations.

The thickness of the film is not critical but will usually be in the range of from 0.2 to 0.5 mm in the wet state (0.04 to 0.1 mm dry).

0115956

The invention is not confined to the use of regenerated cellulose of the type sold under the trade name Viskrings. Regenerated cellulose film coated for heat sealing such as that produced under the trade name of Cellophane can be suitably colour/printed and applied from a reel fitted to a packaging machine. Such a packaging machine is that where the flat film is fed through a heat sealing section to form a continuous tube into which the items can be loaded automatically through a nozzle. The film can then be sealed or clipped to provide a permanent, individual identification and protection pack which can remain on the item. Suitable fungicides, insecticides and/or other ingredients can be loaded into the film during the manufacturing operation, prior to coating.

The invention is not confined to the use of regenerated cellulose film materials. Other bio-degradable films can be used. Such films include, for example, those derived from starch such as crosslinked amylose. Films produced from proteinaceous materials are also suitable, such as, for example, the Collagen tubing used for sausage manufacture. As a further possibility, hardened gelatin encapsulation could be used.

Whilst it is generally preferred in accordance with the invention for each bulb or other item to be encased individually, there may be special applications in which it is desirable or convenient to encase groups of items together. Thus, for example, it could be advantageous to make the casing of so-called "grow bags" of a biodegradable material.

It may be appropriate in some cases for the film to be perforated.

Patent claims:

1.    A method for effecting one or more protection and/or identification functions in relation to bulbs, corms, fruit, vegetables, seeds or the like, in which bulbs or other items are at least partly encased by a bio-degradable film material.

2.    A method as claimed in claim 1, wherein each bulb or other item is substantially wholly encased by the film material.

3.    A method as claimed in claim 1 or claim 2, wherein the film material comprises a regenerated cellulose.

4.    A method as claimed in claim 1 or claim 2, wherein the film material comprises a starch derivative, a proteinaceous material, or gelatin.

5.    A method as claimed in any one of claims 1 to 4, wherein the thickness of the film material in dry condition is in the range of from 0.04 to 0.1 mm.

6.    A method as claimed in any one of claims 1 to 5, wherein the film material is coloured and/or bears printed or otherwise applied characters or other visual identification.

7.    A method as claimed in any one of claims 1 to 6 wherein the items are seeds, the film material is in the form of a tape, and the seeds are encased at appropriate distances apart along the tape.

8. A method as claimed in any one of claims 1 to 6, wherein the film material incorporates one or more fungicides, bactericides, insecticides and/or nutrients.

9. A method as claimed in any one of claims 1 to 8, wherein each bulb or other item is encased individually.

10. Bulbs, corms, fruit, vegetables, seeds or the like, whenever encased by a bio-degradable film material in accordance with any one of claims 1 to 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 312 934 (BIGOT) <br><br> * Page 1, lines 1-29 * | 1,2,7, 9,10 | A 01 C 1/04 <br> B 65 D 85/52 |
| X | US-A-3 328 916 (OKITA) <br><br> * Column 3, lines 51-57; column 4, lines 3-28; column 4, lines 49-54 * | 1,2,5, 6,7,8, 9,10 | |
| X | DE-C- 826 516 (BRÜGEL) <br><br> * Page 2, lines 80-87; claims 1-3 * | 1-4,7- 10 | |
| A | GB-A-2 052 234 (KARLHOLMS) <br> * Page 1, lines 70-75; claim 1 * | 1,4 | **TECHNICAL FIELDS SEARCHED (Int. Cl. 3)** <br><br> A 01 C 1/04 <br> B 65 D 85/52 |

The present search report has been drawn up for all claims

| Place of search | Date of completion of the search | Examiner |
|---|---|---|
| THE HAGUE | 08-05-1984 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82